# EUROPEAN PATENT APPLICATION

(11) **EP 1 251 442 A1**
(43) Date of publication of application: **23.10.2002**
(21) Application number: 00985941.4
(22) Date of filing: 27.12.2000
(51) Int. Cl.: G06F 17/60, B09B 5/00

(54) **SYSTEM AND METHOD FOR ASSISTING PLANNING OF ENVIRONMENT SYMBIOSIS DISTRICT**

(30) Priority: 28.01.2000 JP 2000020622
(71) Applicant: EBARA CORPORATION, Ohta-ku, Tokyo 144-8510 (JP)
(72) Inventor: SEKINO, Hideo, Fujisawa-shi, Kanagawa 251-0046 (JP); INOUE, Satoshi, Kawasaki-shi, Kanagawa 213-0034 (JP); YAMAZAKI, Yuichiro, Kawasaki-shi, Kanagawa 210-0823 (JP); OBUCHI, Masashi, Yamato-shi, Kanagawa 242-0014 (JP); TODA, June, Okegawa-shi, Saitama 363-0021 (JP); SUSAMI, Shu, Machida-shi, Tokyo 194-0033 (JP); YAMANISHI, Yoshie, Kawasaki-shi, Kanagawa 210-0837 (JP)
(74) Representative: Wagner, Karl H., Dipl.-Ing.
(86) International application number: JP0009310
(87) International publication number: WO01055924

(57) **Abstract**

A district assisting system for making a plan of a waste disposal network, Icons (I1 to I3) indicating the kinds of waste are displayed on a monitor screen. The operator selects, e.g., a gasification melting furnace from a disposal facility item box (W2), creates an icon (I4) in a plan sheet box (W1), and draw a line (L1) linking the icon (I1) to the icon (I4). When the operator clicks the icon (I4), the kinds and amounts of residual and valuable substances produced when combustible waste is processed in a gasification melting furnace are displayed. The operator selects the next disposal facility according to the displayed unconnected residual substances, creates an icon of the selected facility on the monitor screen, and links the icon to the icon (I4). Thus a plan is completed.

## Description

### TECHNICAL FIELD

The present invention relates to a system and method of supporting planning of an area with minimized environmental impact, or directing "Zero Emission Society", in view of waste treatment and utility supply planning in the area, and a storage medium storing a program for carrying out the method.

### BACKGROUND ART

In recent years, environmental problems have been gaining increasing attention globally, and a need to balance modern convenience with protection of the environment is now recognized. By the increasing attention of environment, it have made effort to improve environmental impacts, and reformation of life styles and industrial activity styles which may make less environmental impacts has been planning and advancing.

A variety of planning supporting systems of a waste treatment network have been made, which simulate environmental impacts and necessary costs in the network using computers and, on the basis of the results, create a waste treatment network with a view to protecting the environment and reducing costs. An example of such systems utilizes a database storing information on types and quantities of waste, a database storing information on treatment facilities, a database storing information on recycling options, a database storing information on carrying, and so on. The system calculates environment impacts and costs involved in created waste treatment networks referring to the information in the databases, and display the calculated results.

However, the aforementioned planning supporting system does not provide any means for setting/changing a simulation model by modifying the number and type of facilities included in the model, flow of processing from one facility to another, etc. In addition, the system does not provide any means for simulating a utility supply flow representing how to supply or accommodate utilities including energy, water and chemicals needed in facilities in the created waste treatment network.

Further, in general, types, natures and volumes of wastes in an area vary according to reasons such as a population variation and establishment of new companies. Furthermore, there are already existing treatment facilities in the area and treatment facilities have durable years, respectively. Therefore, timings of newly establishments and replacements of the facilities are generally independent thereon.

In view of the above matters, it is necessary to vary types, natures and volumes of wastes to be treated on a waste treatment network for an area, and types, replacement timings and the number of treatment facilities in the network. However, no prior art of a planning supporting system for a waste treatment network provides means for varying them on a time axis.

### SUMMARY OF THE INVENTION

The present invention has been accomplished in view of such problems of prior arts as mentioned above. It is an object of the present invention that types and the numbers of facilities utilized in a waste treatment network model can be settled and modified interactively on a monitor screen, and hence a waste treatment simulation model or plan can be easily created and modified.

Another object of the present invention is to provide a system and method in which simulation models of each of a waste treatment network and utility supply network in an area and/or a combination thereof can be selectively created, and environment impacts (or LCA: life cycle assessments) and facility and human costs (or LCC: life cycle costs) in each of the created network models can be calculated.

Further object of the present invention is to provide a system and method in which simulation models of each of a waste treatment network and utility supply network in an area and/or a combination thereof can be made in considering variation matters on time axis, and LCA and LCC in each of the created network models can be calculated.

Yet another object of the present invention is to provide a system and method in which simulation models of each of a waste treatment network and utility supply network in an area and/or a combination thereof can be made in considering already-built facilities, and LCA and LCC in each of the created network models can be calculated.

In order to achieving the aforementioned objects, the present invention provides a system for supporting in developing plans of waste recycling and waste treatment by simulating with a computer environmental impacts and necessary cost of waste treatment network, which comprises;
a. means for setting types of wastes and quantities thereof in conformity with modes of waste collection in a target area; and
b. means for creating a plan of a treatment facility network by setting on a monitoring screen types of treatment facilities and the numbers thereof provided in the network according to the types and quantities of the wastes, the plan creating means comprises:
   means for forming on a plan sheet section in the screen waste icons respectively representing the types of the wastes that has been set;
   means for forming on the plan sheet section treatment facility icons respectively representing the treatment facilities when the treatment facilities have been selected from treatment facility item section in the screen;
   means for calculating types and quantities of residues thereof, after a first treatment facility icon or one of the waste icons is linked with a second treatment facility icon on the plan sheet section, the residues being generated as the result of treatment by a treatment facility represented by the second treatment facility icon; and
   means for displaying on the screen the calculated types and quantities of the residues,
whereby the treatment facility plan which includes a treatment flow even from one treatment facility to another treatment facility is set on the screen by an operator interactively.

The present invention further provides a method of supporting in developing plans of waste recycling and waste treatment by simulating with a computer environment impacts and necessary cost of waste treatment network, which comprises the steps of;
a. setting types of wastes and quantities thereof in conformity with modes of waste collection in a target area; and
b. creating a plan of a treatment facility network by setting on a monitoring screen types of treatment facilities and the numbers thereof provided in the network according to the types and quantities of the wastes, comprising:
   forming on a plan sheet section in the screen waste icons respectively representing the types of the wastes that has been set;
   forming on the plan sheet section treatment facility icons respectively representing the treatment facilities when the treatment facilities have been selected from treatment facility pool in the screen;
   calculating types and quantities of residues thereof, after a first treatment facility icon or one of the waste icons is linked with a second treatment facility icon on the plan sheet section, the residues being generated as the result of treatment by a treatment facility represented by the second treatment facility icon; and
   displaying on the screen the calculated types and quantities of the residues,
whereby the treatment facility plan which includes a treatment flow even from one treatment facility to another treatment facility is set on the screen by an operator interactively.

In addition to the above, the present invention further provides a storage medium storing a program for implementing the aforementioned method and for conducting computer simulation of recycling of waste and the waste treatment impacts on the environment as well as the cost necessary for operations.

### BRIEF DESCRIPTION OF THE DRAWINGS

Fig. 1 is a block diagram indicating a schematic configuration of a supporting system for waste treatment planning in an area in accordance with the present invention;
Fig. 2 is a functional block diagram for explaining various functions performed by the system of the present invention;
Fig. 3 is a semantic illustration of a monitor screen shot or image when area conditions are being inputted to the present system;
Fig. 4 is a table of waste data about the current amounts of various types of waste those are inputted to the present system;
Fig. 5 is a table of future waste condition data (municipal waste) representing a relationship between the future amounts of waste and the collected amounts classified by a collection mode used in the present system;
Fig. 6 is a semantic illustration of a monitor screen shot which is used when a plan sheet of facilities is being made by setting types of the facilities and the number thereof;
Fig. 7 is a semantic illustration of a monitor screen shot changed from the monitor screen image shown in Fig. 6, by displaying types of residue generated upon treatment at a facility and the amount thereof;
Fig. 8 is a semantic illustration of a monitor screen shot showing an example of a completed plan sheet in a first embodiment of the present system;
Fig. 9 shows graphs in which the plans or models prepared in the first embodiment of the present system are compared with each other in terms of impacts on global warming potential obtained from LCA data calculated with respect to the respective plans;
Fig. 10 illustrates graphs indicating the results of evaluation of plans or models made in the first embodiment of the present system from the viewpoints of environment (LCA) and economy (LCC) in such a manner that an optimum plan or best plan can be extracted from the graphs;
Fig. 11 is a graph indicating the results of evaluation of the plans or models made in the first embodiment of the present system from the viewpoints of environment, economy and policy in such a manner that an optimum plan can be extracted from the graph;
Figs. 12-23 semantically show monitor screen shots used to make a plan or model in a second embodiment of the present system;
Figs. 24(A) and (B) are graphs illustrating the results of evaluation of facilities employed in a plan created in the second embodiment of the present invention, from the viewpoints of global warming potential and cost, respectively;
Fig. 25 is a semantic illustration of a monitor screen shot indicating a utility flow plan made in a third embodiment of the present system; and
Fig. 26 shows a semantic screen shot illustrating a dialog for setting an energy flow in the third embodiment of the present system.

### BEST MODE FOR CARRYING OUT THE INVENTION

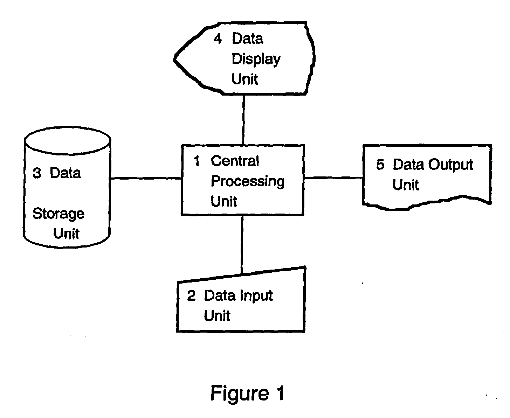

Fig. 1 shows a configuration of an area planning supporting system according to the present invention, for supporting an area planning with zero-emission concept by simulating environmental impacts and cost needed in at least one of a waste treatment and utility supply network plans. In Fig. 1, numeral 1 denotes a central processing unit; 2 a data input device such as a keyboard, mouse, etc.; 3 data storage unit; 4 a data display unit; and 5 a data output unit or printer unit.

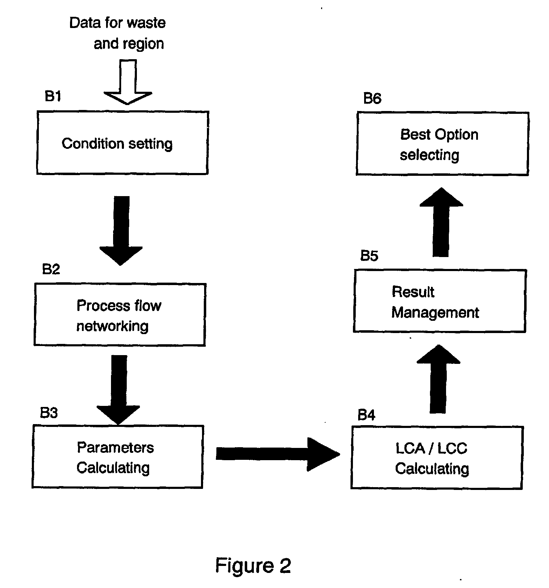

Fig. 2 shows a block diagram schematically describing functions performed by the system illustrates in Fig.1. In Fig. 2, B1 ∼ B6 respectively denote function blocks for condition setting, process flow networking, parameters calculating, LCA (life cycle assessment) / LCC (life cycle cost) calculating, result management, and best option selecting. These functions are performed by the central processing unit 1 on the basis of programs stored in the data storage unit 3.

Hereafter, operations or functions of the respective function blocks B1 ∼ B6 will be explained, with respect to creation of a waste treatment network plan or model.

### Condition setting block B1

At the block B1, area data and waste data are inputted, and a waste condition, a collection condition and a facility condition are set according to the area and waste data. If such data are not available, the above conditions are set based on standard waste data, collection operation standard data, waste treatment standard data and carrying vehicle standard data in the data storage unit 3 (Fig. 1). The "waste" in this specification includes municipal waste, industrial waste, industrial waste water and so on.

### Process flow networking block B2

The block B2 performs a function of making a facility plan, which is used on making a facility plan, in considering which types of facilities such as an incineration plant, recycling plant, sewage treatment plant, a landfill site for disposal, etc should be utilized and how many number of the utilized facilities should be installed in a waste treatment network. At the block B2, it is possible for an operator to interactively set a plurality of facility plans before proceeding to the next block B3 of parameter calculating. At an optional point, such as upon display of simulation results at the block B5, the already prepared facility plans can be modified and new facility plans can be made.

### Parameters calculating block B3

At the block B3, the amounts of utilities and materials are calculated on the basis of the types and numbers of the facilities in each plan settled at the block B2 and the waste condition, collection condition and facility condition settled at the block B1 as well as various initial values stored in the data storage unit 3.

### LCA/LCC calculating block B4

At the block B4, LCC data is calculated based on the utility data and material data obtained at the block B3. Further, inventory data is calculated based on the utility data and material data with reference to the LCI (life cycle inventory) unit data stored in the data storage unit 3. LCA data is calculated on the basis of the obtained inventory data.

### Result management block B5

At the block B5, the LCA and LCC data, etc. obtained at the block B4 are managed. The result of the management is displayed on the data display unit 4 and is also stored in the simulation result storage region of the data storage unit 3. The results of the simulation are displayed in the form of a graph, etc. so that the LCA and/or LCC results of the respective plans made at the block B2 can be readily compared with each other. If necessary, the settled condition data, etc. is also stored and displayed.

### Best option selecting block B6

At the block B6, it is judged comprehensively from the viewpoints of the environment, economy and policy, which one of the plans created at the block B2 is the most favorable. It is also possible to extract an optimum or best plan from the viewpoints of both the environment and economy, or only from either the environmental or economic viewpoint. The extracted optimum plan is stored in the simulation result storage region of the data storage unit 3.

Next, embodiments of the system according to the present invention will be explained. Each of the embodiments or first through fifth embodiments described below can be carried out. However, they can be also carried out in a mode in which any of them are combined. That is, for instance, the present system can be programmed such that the first through fifth embodiment are carried out in the system. In such a case, it is possible to select any one of embodiments in accordance with plan creation viewpoints. It is of course the matter that the first through fifth embodiments will be explained merely as examples, and thus the scope of the present invention is not limited to these embodiments and combinations of any of them.

### First Embodiment

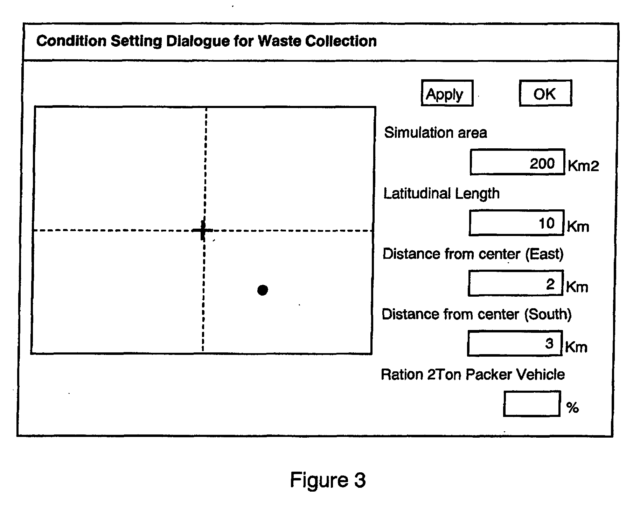

As is explained above, area data and waste data are inputted at the block B1. The area data represents information about the size and population of an area such as a city, town, village, etc., which constitutes a simulation target area. In an input mode of the area data, a rectangular area is displayed on the monitor screen of the data display unit 4 as is indicated in Fig. 3 and an operator inputs via the data input unit 2 information such as a size (two-dimensional extent) of the target area, width (north-south distance) of the area, etc. Based on the inputted size and width, the central processing unit 1 automatically calculates the latitudinal length (east-west distance) of the area. When the operator clicks on a center facility location within the rectangular area displayed on the monitor screen, the central processing unit 1 puts a center facility mark (●) on the screen and calculates a distance from the center of the area to the center facility location. The central processing unit 1 then renders the data display unit 4 to display on the monitor screen the result of the calculation in numerical values as a longitudinal distance from center (from the center of the area to the center facility location in the east direction) and a latitudinal distance from center (from the center of the area to the center facility location in the south direction). The center facility location is referred to as a location where various kinds of treatment facilities for the waste treatment network are gathered.

The operator may input numerical values indicative of the distances from the center (to East and South), and in response thereto, the central processing unit 1 may put the center facility mark on the screen. Further, an actual map of the subject area may be displayed on the monitor screen, on which the center facility mark is put.

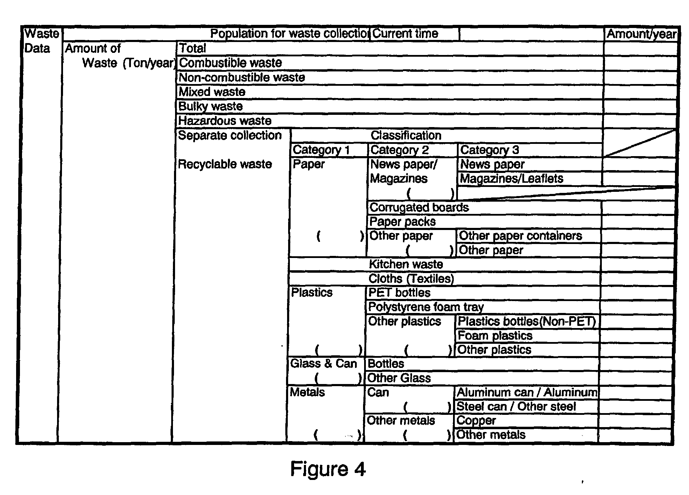

The waste data to be inputted represents information about the current annual amount of waste, waste water such as sewage, etc. from the target area. When waste data concerning the area is not available, the standard waste data stored in the data storage unit 3 is selected and used according to the size of the area. The waste data may be classified for input as is indicated in Fig. 4.

The central processing unit 1 sets waste condition, collection condition, and facility condition, based on the inputted waste data and area data as well as the standard condition data for collecting operation and standard data for collection vehicle, etc. stored in the data storage unit 3.

In calculating waste condition data, a "collected amount classified by modes", which indicates the current amounts of waste collected according to collection modes, is calculated on the basis of the inputted waste data, that is the current "amount of collected waste" and "amount of discharged waste water".

In general, combustible waste may contain both waste that should be incinerated and waste that can be recycled, such as paper, etc., and thus not all the combustible waste can be designated for incineration. By the same token, non-combustible waste may also contain both recyclable and non-recyclable waste. Consequently, waste needs to be categorized to a collected amount in accordance with particular collection modes. At this stage, such conversion is conducted.

The current amount of collected waste classified by collection modes is referred to as "current waste condition data".

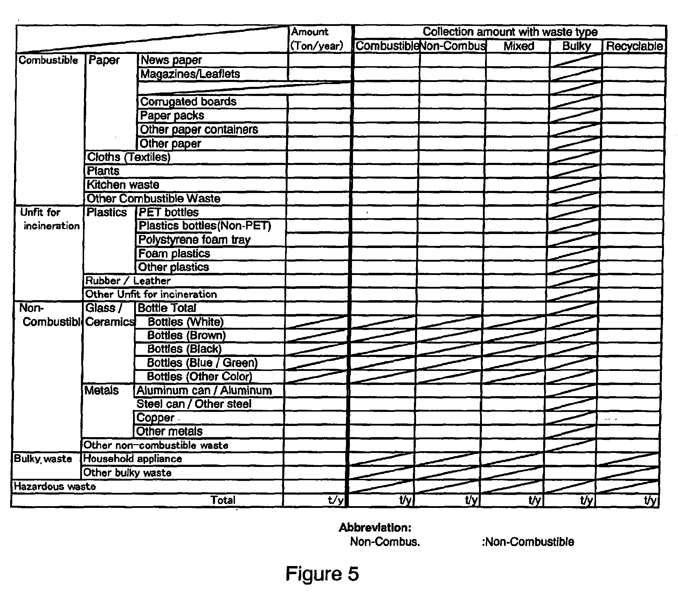

Then, the central processing unit 1 estimates "future waste condition data". The future waste condition data is obtained by estimating, based on the current waste condition data and a population growth rate, etc., future changes in waste collection and waste water treatment in the area in, for example, five years when the waste treatment network may build up and commence the operation. Although the future waste condition data is classified into a group similar to that to which current waste condition data belongs, waste can be classified in more detail as needed. This is because it is assumed that division of waste will be conducted stringently by the timing at which the operation of the waste treatment system commences. Types and amount of municipal waste collected in accordance with a particular collection modes in the future waste condition data can be represented as shown in Fig. 5.

As for data concerning "waste water" in waste condition data, data about the current amounts of classified waste water are first inputted, on the basis of which an estimate of future conditions is calculated, as is similar to the case of the municipal waste. Waste water is classified into "sewage (including rainwater)", "industrial waste water" and "night soil", and a future treatment method is selected, such as a method for treating them separately in the future or a method for treating "night soil" separately from "sewage" and "industrial waste water" which are treated together. Future amounts of classified waste water are estimated based on the current amounts of the classified waste water, and amounts of (differently-classified) waste water to be treated by the selected treatment method are set as future classified waste water condition data in "future waste condition data". For example, if the latter method for treating "night soil" separately from "sewage" and "industrial waste water" is employed, two discharge amounts, that is, a future amount of night soil and a future combined amount of sewage and industrial waste water will be estimated.

An operator can check the settled data, that is, the current waste condition data and future waste condition data on the monitor screen.

The central processing unit 1 also sets collection condition data. The collection condition data includes standard condition data for collecting operation, data (loadage and cost) about collection vehicles employed, data about specific weight of waste and the number of persons per collection vehicle, those are read out from the data storage unit 3. The collection condition data also contains, data about types of collection vehicles to be employed according to waste types and data indicating whether loadage should be calculated on the basis of capacity or mass.

The collection condition data contains a collection travel distance for a collection vehicle selected according to the inputted area data to travel per collection trip.

The facility condition data includes conditions common to facilities and conditions specific to each facility, which are read from the data storage unit 3, and facility conditions specific to the area inputted by an operator. The data of conditions common to facilities means data of various standard conditions necessary to construct and operate the facilities, and contains, for example, data concerning energy such as electricity, cost of water and chemicals, personnel expenses, recycling ratios of construction materials, etc. The data of conditions specific to a facility contains data about the rate of operation of the facility, the life of the facility, the number of persons to be employed at the facility, cost of repair work on the facility, etc.

Following are examples of facility modules, although it should be understood that the modules can be added or deleted as required.
* Incineration plant: gasification combustion system, stoker furnaces + plasma ash melting system, stoker furnaces, plasma ash melting system, fluidized bed incineration equipment, kiln-stoker furnaces
* Recycling facilities: recycling center, composting facilities, methane fermentation process system
* Sewage treatment plant: biological aerated filter system, anaerobic treatment system, standard activated sludge process equipment, oxidation ditch treatment system
* Night soil treatment plants: standard denitrification treatment system, membrane separation non-dilution denitrification treatment system
* Intermediate treatment plant: bulky waste crushing facilities
* Landfill site: controlled landfill site

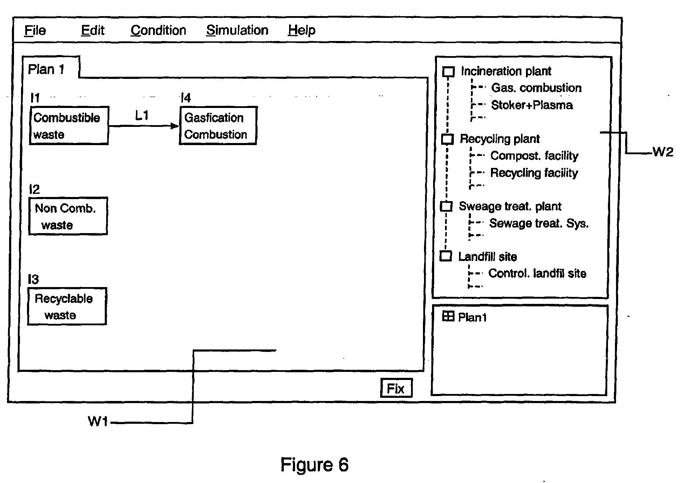

After the condition setting operation is completed, and the process proceeds to the next block B2 where a process flow networking function is performed. At the block B2, an image as shown in Fig. 6 is displayed on the monitor screen of the data display unit 4 under control of the central processing unit 1. It should be noted that at the beginning of an operation at the block B2, for instance, waste icons I1 - I3 are already displayed on a planning area W1 of the screen while a facility icon is not yet displayed. The icon I1 - I3 respectively represent combustible waste, non-combustible waste and recyclable waste which were selected during the condition setting at the block B1 and the icon I4 represents a gasification combustion system. When the operator clicks on anyone of the icons I1 - I3 when only the waste icons I1 -I3 are displayed, the amount of combustible waste, non-combustible waste or recyclable waste represented by the clicked icon is displayed on the planning area with reference to the collected amount classified by modes in the future waste condition data (see Fig. 5). It is possible to display the amounts of the three types of waste simultaneously.

In the example, it is assumed that there are no collection modes exclusively for mixed waste and bulky waste in the future waste condition. In order to set the simulation system such that there are collection modes specific for mixed wastes and bulky waste, icons representing mixed waste and bulky waste respectively are displayed in the planning area W1 in place of the icons I1 and I2.

In Fig. 6, an area W2 arranged in the upper right portion of the window is a facility pool, in which names of specific facilities of incineration plant, recycling plant, night soil treatment plant, intermediate treatment plant and landfill site are indicated. In the facility pool W2, each of the facility name is preceded by an icon representing the facility. When the operator selects, for example, the gasification combustion system of the incineration plants in the facility pool W2 and drag-and-drops it in the planning area W1, the screen image shown in Fig. 6 is obtained.

Instead of placing the icons representing the facilities next to their names in the area W2, the operator may click on a facility name per se to select the facility and subsequently click on the planning area W1, whereby an icon corresponding to the selected facility is displayed on the area W1.

Next, the operator links the combustible waste icon I1 with the gasification combustion system icon I4, as a result of which a link line L1 connecting the icon I1 to the icon I4 is displayed in the planning area W1.

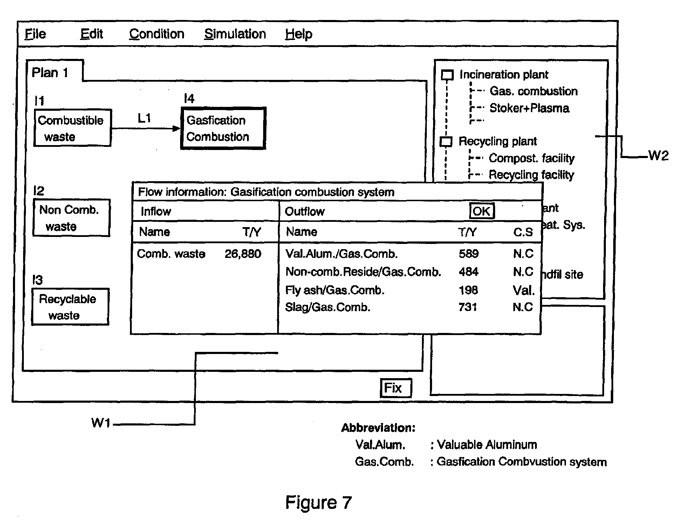

When the operator clicks on the gasification combustion system icon I4 in this state, the types of "residue (non-combustible residue, fly ash, etc)" and "valuables (aluminum, slag, iron, etc.), and the amounts thereof are displayed as shown in Fig. 7. The residue and valuables are generally produced by incinerating combustible waste in the gasification combustion system. Thus, the operator can confirm the types and amounts of valuables and residue to be connected to some facilities for further treatment and recognize to transport or carry the unconnected residue to, for example, the controlled landfill site, etc. Upon confirming such unconnected residue, etc., the operator selects the controlled landfill site in the facility pool W2, drag-and-drops the icon representing it into the planning area W1 and links the icon with the icon I4.

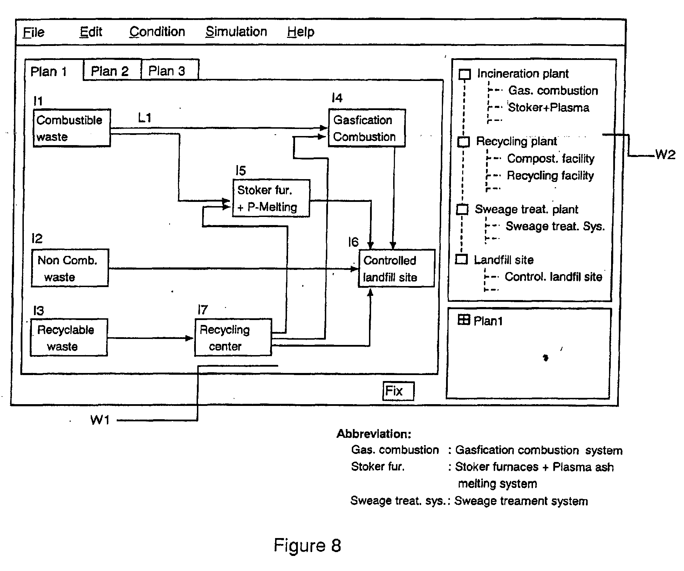

Similarly, the operator selects a facility name listed in the facility pool W2, drag-and-drops the icon representing the selected facility in the planning area W1 and links the icon with some of the waste icon I1, I2 or I3 and also with an icon representing another facility, thereby completing a simulation model on the planning area as indicated in Fig. 8. As is explained with reference to Fig. 7, the operator can see on the monitor screen a residue, etc. induced upon treatment at each treatment facility. Accordingly, the operator can complete the plan sheet while checking such unconnected residue and the amount thereof, and hence he or she can prepare and complete the simulation plan or model interactively with the central processing unit 1.

The operator may create in advance in the planning area W1 a plurality of facility icons that are expected to become necessary in a waste treatment network plan, link the waste icons with the created facility icons and further link the facility icons with one another.

According to the plan shown in Fig. 8, the combustible waste is fed to the two different incineration plants, the gasification combustion system (icon I4) and stoker furnace + plasma ash melting system (icon I5) and the residue such as ash, etc. produced from the two incineration plants is treated at the controlled landfill site (icon I6). On the other hand, the non-combustible waste (icon I2) is sent directly to the controlled landfill site (icon I6) for treatment, whereas the recyclable waste (icon I3) is carried to the recycle center (icon I7) for the purpose of future reuse or recycling. A part of the residue created upon the recycling is treated at the controlled landfill site and the rest thereof is incinerated in the stoker furnace + plasma ash melting system, and ash, etc. created upon incineration at the system is treated at the controlled landfill site.

In the case where the model is set such that one type of waste is treated at more than one facilities, that is, combustible waste is treated at the gasification combustion system and stoker furnace + plasma ash melting system, or recyclable waste is treated at the recycling center, stoker furnace + plasma ash melting system and gasification combustion system, an operator can arbitrarily determine and set the amounts of waste to be treated at the respective facilities.

The recycle center and gasification combustion system may produce valuable material such as metals, etc. from the waste, and types and amounts thereof are displayed on the monitor screen as shown in Fig. 7. The combustion system may produce heat energy and electric energy by incinerating waste. Although such valuable materials and energy are not connected to any further facilities in the planning area W1 shown in Fig. 8, it is possible to set a simulation plan or model such that the valuable materials can be commercially exploited at a set facility and the energy can be utilized at or sold to another facility. As to the modification, it will be explained in more detail, with respect to the second embodiment.

Upon completion of the first plan, the operator can create another plan in the same manner. In a second plan, specific facilities in incineration plants and recycling plants as well as the location of the center facility, etc. can be changed arbitrarily from the first plan.

Thus, an optional number of plans (one or more than one) are made by the operator. The operator may display the prepared plans on the monitor screen so that some items on the plans can be corrected on the screen, if necessary.

Subsequently, the system process proceeds to the next block B3 for performing the parameter calculating. The central processing unit 1 calculates the amounts of utilities and materials necessary in each prepared plan, according to types and sizes of facilities, etc. set in the plan. The calculation is executed by referring to the various condition data set at the block B1 and the initial data stored in the data storage unit 3. The utility data includes the amounts of energy consumed (electricity and fuel), the amount of water used, the amounts of chemicals used, etc. during an operation of each employed facility. The materials include construction materials to build the facilities, materials for repairing the facilities, etc.

Next, the process proceeds to the block B4 for performing the LCA/LCC calculating. The central processing unit 1 calculates LCC data based on the utility data and material data obtained at the block B3, and inventory data based on the LCI unit data stored in the data storage unit 3. The inventory data is indicative of how much CO₂, CO, dioxin, NOx, SOx, soot and dust, BOD, COD, T-N, T-P, etc. may be discharged during a life cycle of the prepared waste treatment network (for example 60 years including the time for construction, operation and dismantling of the network). Based on the inventory data, there is calculated data for estimating environmental impacts. The environment impacts are evaluated in terms of, for example, "global warming potential", "eutrophication", "acidification potential", "resource consumption", etc. and each impact is represented in numerical values.

The central processing unit 1 manages, at the result management block B5, the obtained cost data, environment impact data and inventory data. The unit 1 also displays them on the data display unit 4 and stores the same in the simulation result storing region in the data storage unit 3. In the storing region are also stored the inventory data and contents of each prepared plan, etc. If necessary, the results are printed by the data output unit 5.

The simulation results obtained at the block B5 may display in a form of values of the environment impact, cost and inventory obtained at the block B4. Further, the analysis results of all the plans can be displayed in the form of graphs for the sake of ready comparison of the plans.

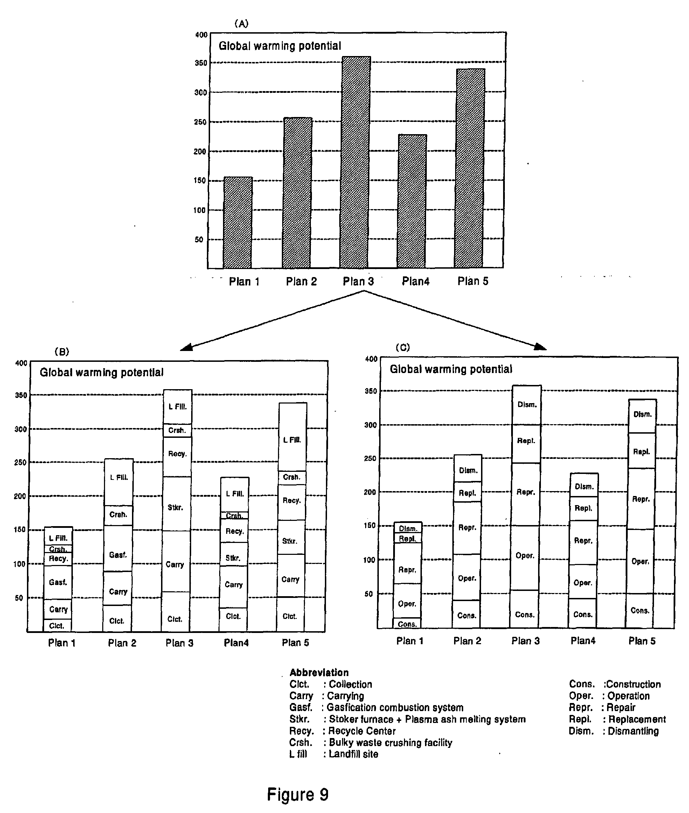

For example, Fig. 9 shows bar graphs representing the environmental impacts evaluated for five plans in terms of global warming potential, wherein the lower the values, the less the environment impacts. Fig. 9(A) shows overall global warming potential of the plans. Fig. 9(B) shows the same global warming potential broken down into those deriving from respective facility modules such as "landfill site", "bulky waste crushing facility", "recycling center", "incinerator (stoker furnace or gasification combustion system)", "carrying" and "collection". Fig. 9(C) shows the same global warming potential broken down into those deriving from the stages a life cycle of facilities such as "construction of facility", "operation of facility", "repair of facility", "replacement of facility" and "dismantling of facility".

According to the example indicated in Fig. 9, Plan 1 is the most favorable and Plan 3 is the worst in terms of the global warming potential. In Plan 3, as a facility module, the "stoker furnace" exacerbates to global warming potential the most, whereas as a life cycle factor, the "operation" exacerbates the global warming potential. Therefore, it is clear from the above that by taking some measures to change those factors causing exacerbation of the global warming potential, a more effective plan can be prepared.

The environment impacts represented by the graphs in Fig. 9 can be represented by other forms such as "eutrophication potential", "acidification potential", "resource consumption", etc. in place of "global warming potential". Further, the cost data can be also displayed in the form of graphs in the same manner as in Fig. 9 so that the cost data necessary for the respective plans can be readily compared.

In the block B5, it is also possible to calculate toxic risk assessment data as well as the LCA, LCC and inventory data. By using the toxic risk assessment calculation function, since risk assessment for human system, and animals and plants in the sea and earth can be obtained, politicians, plant owners, NPO, etc. can predicts the risks before they actually occur. Therefore, they can quickly forecast predicted information about environmental impacts if an accident occurs. Further, they can cooperate with insurance company, using the predicted information.

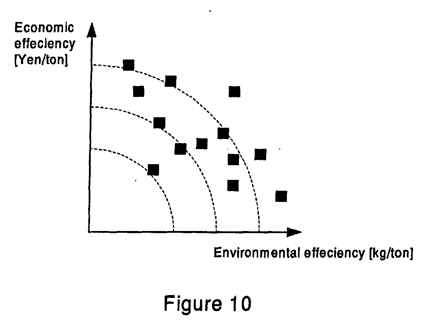

Then, the process goes to the next block B6, where the central processing unit 1 extracts an optimum or best plan. To extract the best plan, the data about evaluated environment impacts and cost obtained at the block B4 are respectively converted to environmental efficiency [kg/t] and economic efficiency [yen/t] at the block B6 and such efficiencies of each plan are displayed on the monitor screen as a plot image. In the plot image of Fig. 10, the plans represented by the dots on the same concentric circle have approximately equal efficiencies in terms of environment and economy, and the plans represented by the dots closer to the origin are more efficient than those farther away from the origin.

Further, it is possible to display evaluation results from not only environmental and economic aspects but also by the degree of conformity with the waste management policy of the subject area taken into consideration.

For example, if a plan is made on the monitor screen as shown in Figs. 6 - 8 in which an incineration plant is built outside the subject area, cost of carrying of waste to the incineration plant and the amount of gas emitted by the carrying may become greater, compared to the case where the incineration plant is within the subject area. On the contrary, the amount of gas emitted by incineration becomes zero within the subject area. Therefore, if an incineration plant, etc. is built outside the subject area, it is favorable from the environmental viewpoint. The cost necessary for carrying is not expected to substantially increase.

In the meantime, a policy for improving a "internal waste disposal ratio", "recycling ratio" and "waste reduction rate" has been advocated. Thus, the aforementioned plan for building an incineration plant outside a target area is favorable from the environmental viewpoint of only the area, but unsatisfactory in terms of compliance with the above advocated policy.

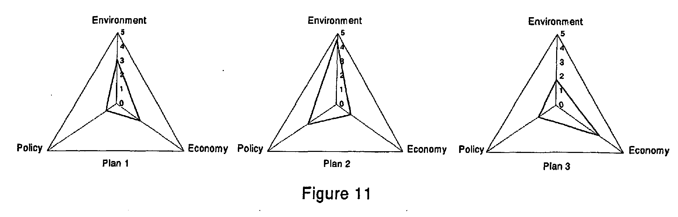

Thus, it is necessary to evaluate plans by taking an advocated waste management policy into consideration, and thus, as is indicated in Fig. 11, for example, it is desirable to indicate evaluation results three-dimensionally in terms of environment, economy and policy. In Fig. 11, the greater a value on each axis, the more satisfactory, which means that the larger a area of the triangle formed by the three points on the three axes is, the greater the efficiency is.

By evaluating the prepared plans from various viewpoints and displaying them graphically as shown in Figs. 10 and 11, the operator can readily extract an optimum or best plan. Otherwise, the best plan may be automatically extracted under control of the central processing unit 1 and the extracted best plan may be highlighted on the monitor screen, thereby automating extraction of a best plan. Further, it is also possible to conduct best plan extraction from the viewpoint of either the environment or economy, as in the graphs in Fig. 9, which shows the global warming potential of prepared plans.

Since the first embodiment of the present system is configured as described above, it is possible to visually and interactively set and change types of the facilities and the numbers thereof for a waste treatment network plan, which makes easier preparation/change of the simulation plan of a waste treatment network. Further, as valuables obtained upon treatment of waste at each facility and the amount thereof can be checked at a glance, the present system is very effective in making a plan for recycling of waste.

### Second Embodiment

According to the first embodiment as described above, throughout the entire period in which the simulation is to be conducted, such conditions as the population in the area in question, waste, prices of commodities, etc. are all treated as unchanged and the respective facilities are all considered to be constructed at the beginning of the simulation period. However, in actuality, the population, the types of the waste and amounts or quantities thereof, the prices of commodities vary each year. Accordingly, it is necessary that setting of the condition of timing of new installation of facilities in which the variation of the population, the waste and the prices of commodities have been duly taken into consideration (herein after "setting of the condition considering the time axis") is made feasible in the simulation.

It is to be understood that the second embodiment has been made it possible to set the condition considering such a time axis in a simulation plan. It is to be understood that the second embodiment is also implemented in the systems shown in Figs. 1 and 2.

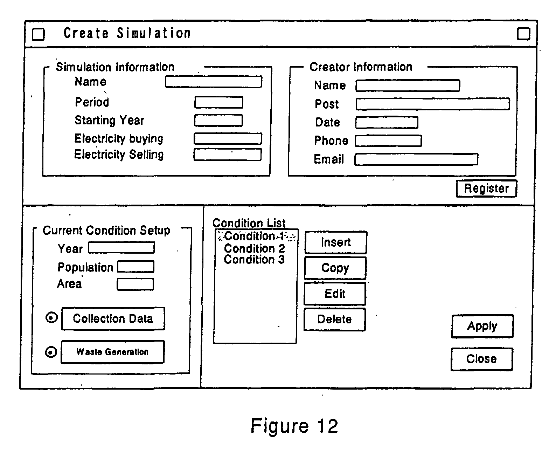

Fig. 12 - 22 typically illustrate principal window images which are displayed to an operator during making a simulation plan according to the second embodiment. These images are displayed on the data display unit 4 shown in Fig. 1 by performing the functions of the block B1 "condition setting" and the block B2 "process flow networking" shown in Fig. 2.

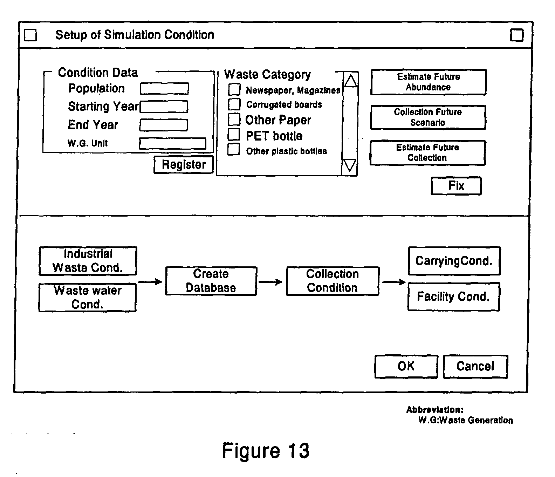

Fig. 12 illustrates an image of "Create Simulation". The operator can input, on the screen, necessary setting conditions such as "Simulation Information" comprising the period of simulation, starting year, electricity buying, electricity selling, and "Current Condition" comprising the current year, population, area, current collection data of the waste, current waste generation. The operator then selects "Condition 1" out of the "Condition List" for future, and thereafter clicks the "Insert (new implementation)" button, resulting in that the screen of "Setup Simulation Condition (future condition)" as shown in Fig.13 is displayed.

The image as shown in Fig 13 is displayed every time when the "Insert" button is clicked after having selected the "Condition 1", "Condition 2", and so on shown in Fig. 12 and serves to set the "Condition 1". "Condition 2" for future and so on which correspond to the clicked conditions. These conditions 1, 2, ... are determined under the precondition that the entire simulation period (for example, period of sixty years starting five years from now) is divided into sub-periods such as sub-period 1, 2, ... and the "Condition i" (where i=1, 2, ....) is not identical to the "Condition i+1". It is also to be noted that if necessary, the period from now to the sub-period 1 is regarded as sub-period 0 (for example, 4 years from now), and the "Condition 0" in the case of the current condition being continued as it is may also be subjected to simulation.

In order to set the "Conditions i", the operator inputs on the screen shown in Fig.13, "Condition Data" comprising the population, starting year, end year and unit data, and selects types of waste to be collected from "Waste Category". By setting the starting and end years, the sub-period i is defined. And for every "Condition i", "Estimate Future Abundance", "Collection Future Scenario", "Estimate Future Collection", "Industrial Waste Condition", "Waste Water Condition", "Create Database (of waste)", "Collection Condition", "Carrying Condition", and "Facility Condition" are respectively clicked, so that the conditions to be estimated in each sub-period of the subject area are inputted. It is understood that since the respective conditions of future are not changed necessarily to a great extent, the "Condition i" that have been set previously may be copied as other "Condition i+1", "Condition i+2 " and so on, and subsequently the copied conditions may be edited suitably.

When the current conditions are inputted in the screen shown in Fig. 12 and " Condition i" of future is input in the screen shown in Fig. 13, setting of the conditions is completed.

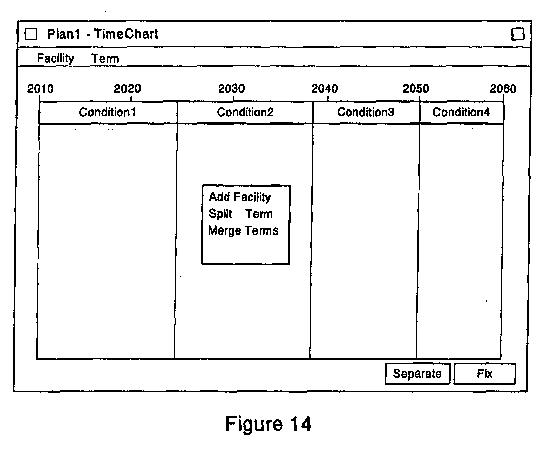

After the current and future conditions have been set, an image "Plan 1-Time Chart" as shown in Fig. 14 is then displayed. Fig. 14 illustrates a pop-up menu P1, which will be explained after. According to this example, the entire simulation period is set as 50 years and the period is divided into 4 sub-periods 1 - 4. In other words, the sub-periods 1-4 respectively correspond to "Condition 1" through "Condition 4" and are respectively settled as years of 2010 - 2025, 2026 - 2038, 2039 - 2050, 2051 - 2060. In this example, although "Condition 0" is not displayed on the screen, it may be set and displayed if necessary as described above.

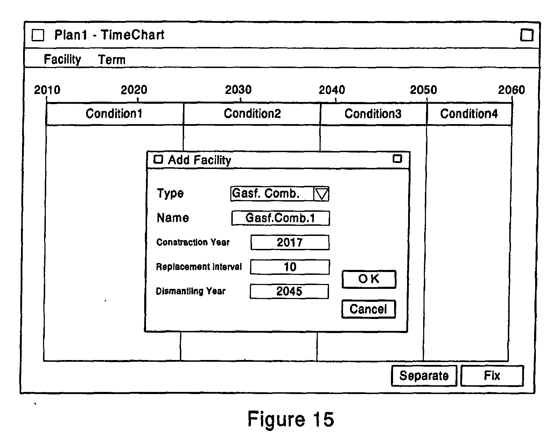

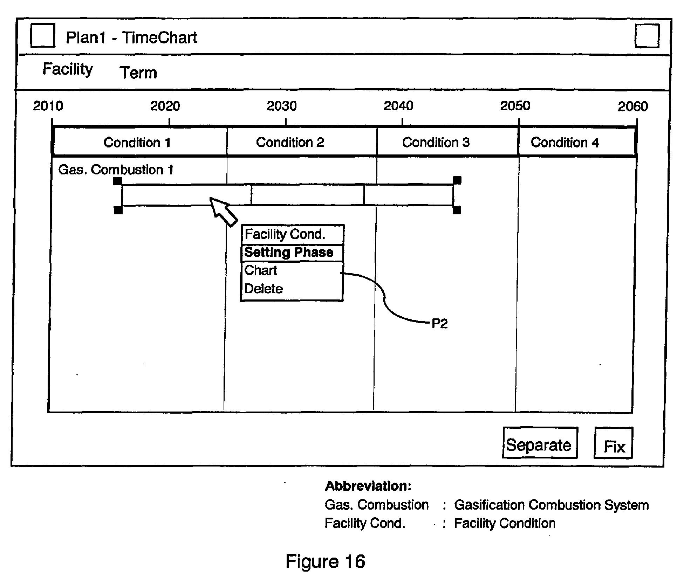

The menu P1 will be appeared when the operator right-side-clicks on the screen of Fig. 14, which consists of "Addition Facility", "Split Term", "Merge Terms". If "Addition Facility" is selected from the pop-up menu P1, an "Addition Facility" dialogue D1 will be displayed on the screen as shown in Fig. 15. The dialogue D1 is used to set conditions of a facility to be newly installed or constructed. The operator inputs in the dialogue D1 "Type", "Name", "Construction Year", "Replacement Interval", "Dismantling Year" of the facility. In the example shown in Fig. 15, the facility to be added or newly constructed is a gasification combustion system, and the information has been inputted to the construction of the facility is scheduled to be completed in 2017 and the subsequent interval of replacement or the life cycle of the facility is 10 years and the dismantling year of the facility is scheduled in 2045. In this way, one gasification combustion system has been added in the waste treatment network. The timing of the construction, interval of operation, and timing of replacement and dismantling of the gasification combustion system are displayed on the time axis in the form of bar graph, as shown in Fig. 16.

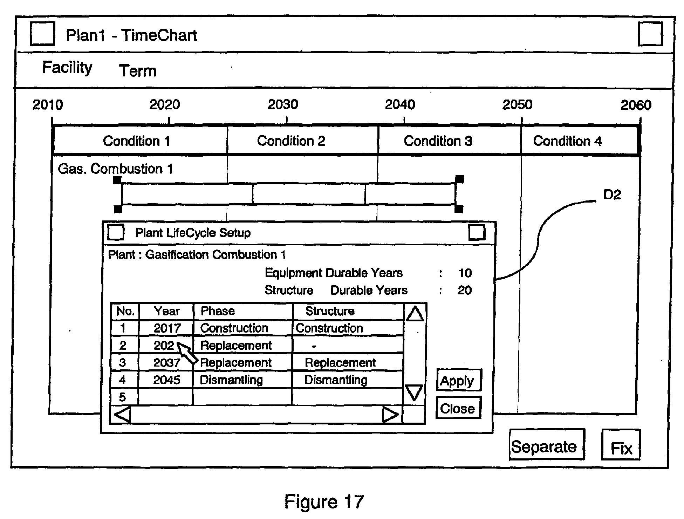

A menu P2 on the screen shown in Fig. 16 is displayed in a pop-up manner when the operator executes a right-side clicking on the graph representing the gasification combustion system. The menu P1 contains "Facility Condition", "Setting Phase", "Chart (variation of charging)", and "Delete". When the "Setting Phase" is selected from the pop-up menu P2, the dialogue D2 of "Plant Life Cycle Setup" is displayed as shown in Fig. 17, thereby the operator can modify the phase setting of the facility if necessary. For example, since the replacement interval of the gasification combustion system is 10 years, the first timing of replacement is 2027 (cf. construction is 2017). However, such modification as shortening the replacement interval by for example 2 years may be executed.

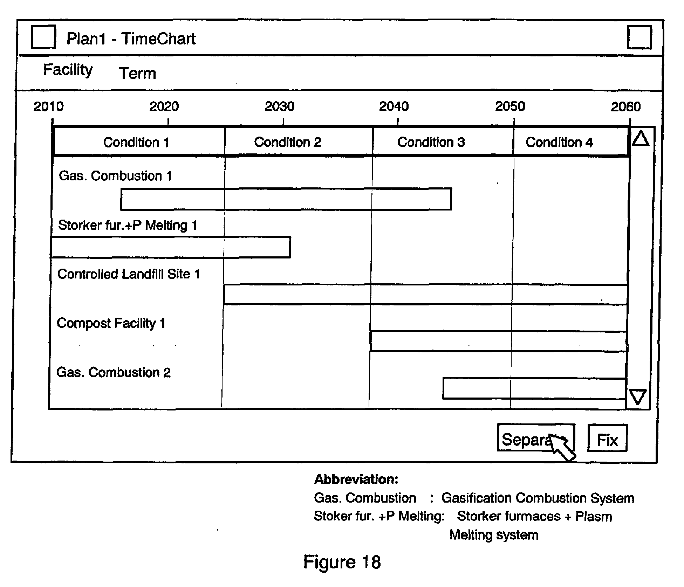

By adding facilities as explained above with reference to Fig. 14 through Fig. 17, "Gasification combustion system 1", "Stoker furnace + Plasma melting system 1", "Controlled landfill site 1", "Compost facility 1", and "Gasification combustion system 2" ,for instance, as illustrated on the screen in Fig. 18. The operation time periods of these facilities are displayed on the time axis.

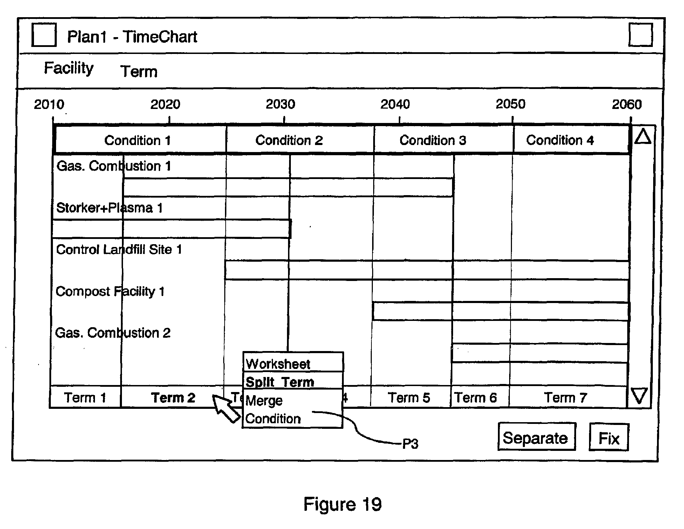

Upon completion of facility setting, when "Separate" button at the right lower part of the screen shown in Fig. 18 is clicked, then sub-periods 1 - 4 corresponding to "Condition 1" through "Condition 4" are automatically divided respectively. Fig. 19 illustrates such an image, in which the sub-period (sub-division of the entire simulation cycle) of "Condition 1" through "Condition 4" into "Term (sector) 1"through "Term 7", which are arranged at the lowermost part of the screen. The "Term 1" through "Term 7" are determined such that the starting year (or end year) of the respective "Conditions i" (i = 1, 2, 3, 4) as the delimitation points of the Terms 1 - 7, and further in case that new construction, replacement or dismantling of facilities are set in the midst of the sub-period i corresponding to the "Condition i", these timings are taken as the delimitation points of the Terms 1 - 7. For example, if it is desired to further split or divide the "Term 2" shown in Fig. 19, or to merge or couple the "Term 2" with another "Term 3", the operator selects the "Term 2 " and clicks thereon to display a pop-up menu P3. The menu P3 contains "Worksheet", "Split Term", "Merge", and "Conditions". The operator then selects the "Split Term" or "Merge" in the menu P3, and thereby split (sub-division) or merge (re-coupling) operation screen is displayed.

Thus, after having added facilities and settled sector terms, the operator selects "Fix" button on the screen shown in Fig. 19. However enough facilities which are capable of treating all types of wastes which have been set as described with reference to Fig. 13, have not been set by the operator, an alarm is activated to urge the operator to add some facilities.

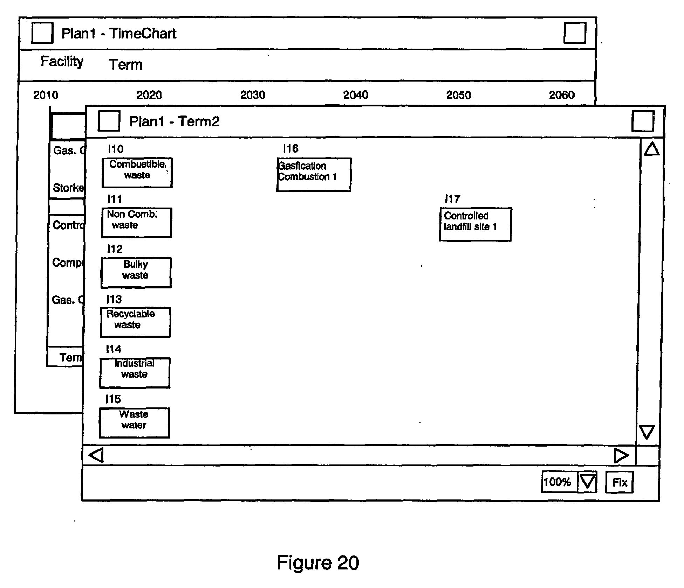

On the other hand, in case that the facilities which are capable of treating all sorts of wastes have been settled, by selecting the "Term 2" for instance and the "Worksheet" in the pop-up menu P3, an image shown in Fig. 20 is displayed. On this screen, icons relating to the facilities to be operated in the "Term 2" (which has been selected on the screen shown in Fig. 19) as well as icons relating to the types of wastes to be treated in the "Term 2" are automatically displayed. In the drawing, "Combustible waste" icon I10, "Non-combustible waste" icon I11, "Bulky waste" icon I12, "Recyclable waste" icon I13, "Industrial waste" icon I14, and "Waste water" icon I15 are displayed as the waste icons. By clicking anyone of the waste icons I10 - I15, the quantity or amount of the waste to be collected (which has been set on the screen shown in Fig. 12 and Fig. 13) is displayed in a manner of pop-up, similar to the first embodiment. As to the facility icons, for the sake of simplifying the explanation, an icon I10 of "Gasification combustion system 1" and an icon I17 of "Controlled landfill site 1" are only shown, a crushing facility for "Bulky waste", a recycling center for treating "Recyclable waste", a sewage treatment plant for treating "Waste water" and the like are also settled as facilities. Such icons as indicating those facilities are also naturally displayed on the screen shown in Fig. 20.

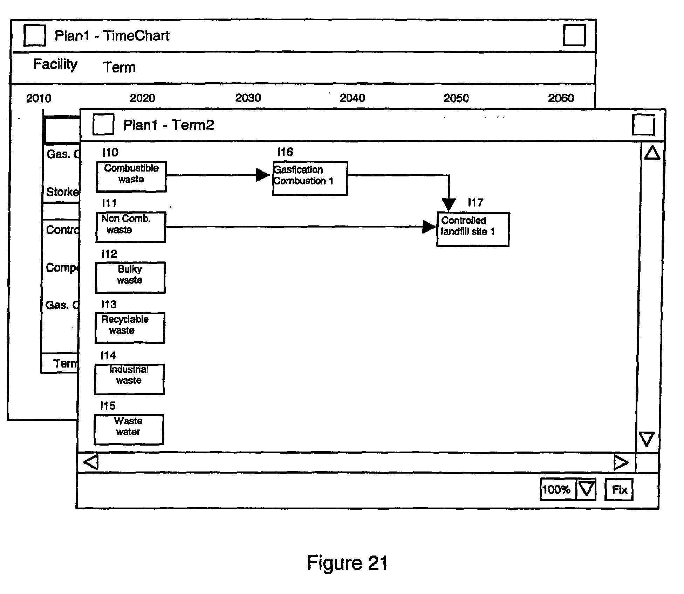

Then, the operator defines waste treatment flows by appropriately linking the waste icons with the facility icons, as well as linking the facility icons with another facility icons as shown in Fig. 21 (in the same manner as shown in Fig. 8 relating to the first embodiment). Thus, a waste treatment network for the "Term 2" is completed.

Similarly, waste treatment networks for the other Terms 1, 3 - 7 will be defined and hence all the treatment networks for Terms 1 - 7, i.e. "Plan 1" will be completed.

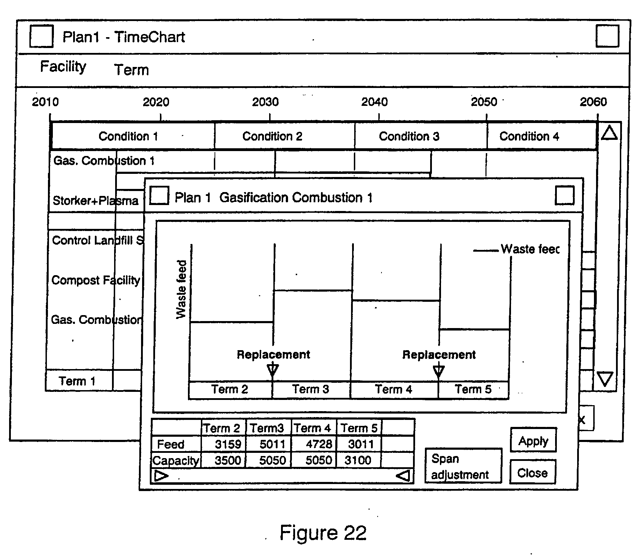

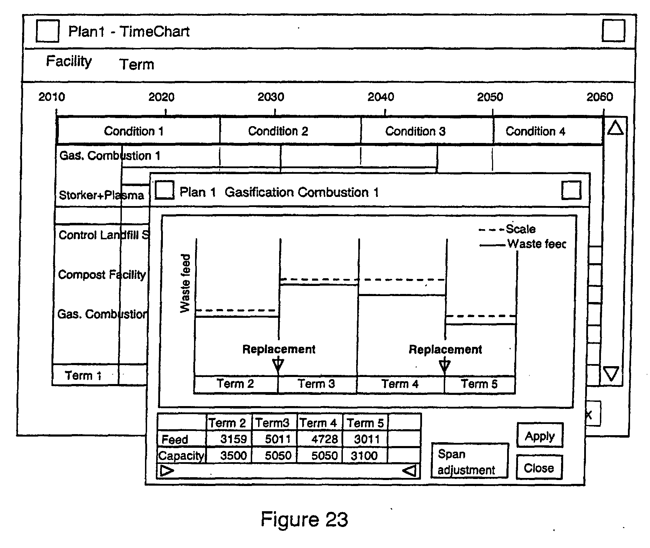

After completion of "Plan 1", the operator may observe a graph illustrating the variation of "Waste feed (Charging quantity)" of waste into the "Gasification combustion system 1" and so on, as shown in Fig. 22. This can be executed by using the pop-up menu P2 (Fig. 16) to be displayed on the screen of "Plan 1-Time Chart" and selecting the "Chart" representing variation in waste feed quantity on the menu P2. Since the "Gasification combustion system 1" is set to operate from the "Term 2" through the "Term 5" in the above mentioned example, the graph shown in Fig. 22 indicates how the waste feeding has been set for each of the Terms 2 - 5. Furthermore, as shown on the screen in Fig. 23, the "Capacity" of anyone of the facilities, i.e. the quantity of the waste feed which can be treated by the facility can also be graphically displayed along with the variation of the waste feed amount. The operator can modify the phases of the facilities by clicking a "Span adjustment" button shown in Fig. 23.

Furthermore, if it is necessary to create other plans, the operator may make "Plan 2", "Plan 3", and so forth, in the same way as already explained with reference to Figs. 12 - 23.

As explained above, executing the block B1 "Condition setting" and the block B2 "Process flow networking", it is possible to interactively create various kinds of simulation plans.

In the next stage, the evaluation process of the created plans will be explained. This plan evaluation process is activated by clicking "Fix" button on the screen shown in Fig. 21, before the screens shown in Fig. 22 and Fig. 23 will be displayed or after they have been displayed. This evaluation process is performed in the same manner as that in the first embodiment, by practicing the functions of the block B3 "Parameter calculating", the block B4 "LCA/LCC calculating", the block B5 "Result management" and the block B6 "Best option selecting" which are illustrated in Fig. 2.

However, since in the second embodiment, different "Conditions" for future are set for each sector term (Terms 1 - 7), in the case of evaluation process of "Plan 1" the quantities of utilities and materials are calculated each for "Term 1" "Term 2", .... "Term 7" in the block B3 of "Parameter calculating", LCC data and LCA data are calculated for each sector term in the block B4 of "LCA/LCC calculating", and then LCA data and LCA data for all the terms are summed. Thus, LCC data and LCA data for the entire simulation period as set in "Plan 1" can be calculated.

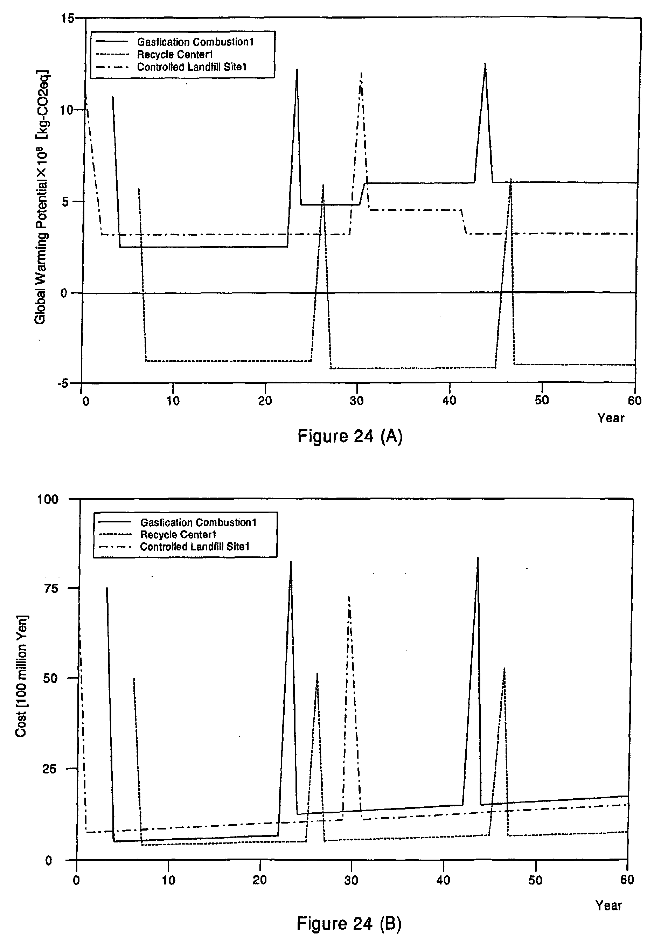

Figs. 24(A) and 24(B) illustrate examples of the results of evaluation of a plan which has been produced and evaluated according to the system of the second embodiment. Fig. 24(A) illustrates for each facility how the created plan may influence over the global warming potential while Fig. 24(B) illustrates how much cost may be required for each facility. In Fig. 24(A) and (B), the points indicated by acute peaks represent timings of new construction and replacement of facilities. As shown in Fig. 24(A), it may be clearly expressed that the global warming potential may be mitigated by installing recycling centers in a waste treatment network. In the example shown in Fig. 24(B), it has been settled that a construction cost is appropriated in the year of initial use, operation and maintenance costs are appropriated every year, and replacement and dismantling costs are appropriated in the year next to such replacement and dismantling. Price increase of commodities has been also taken into consideration. The variation of costs shown in Fig. 24(B) may serve as the basis for studying the necessary budget for new construction, replacement and operation of respective facilities.

In the second embodiment, evaluation in respect of conformity with the waste management policy may also be introduced in addition to the evaluation in respect of environment impacts and costs, similar to the first embodiment. The results of such evaluation may also be displayed in the form similar to that of Figs. 9 - 11.

### Third Embodiment

It is usual that a certain sorts of facilities are already existing in the starting or initial year of a simulation. It is, therefore, necessary that timings of new constructions of facilities should be made feasible in considering not only variation of population, volumes and quantities of wastes and prices of commodities but also factors relating to the existing facilities. The third embodiment has made it possible to create plans in considering factor relating to the existing facilities, in addition to the second embodiment.

Although, in the third embodiment, new constructions of the facilities are executed in consideration of a remaining service life of the existing facilities, it is possible to dismantle the existing facilities before their service life comes to the end. Furthermore, in the case of LCA/LCC calculation with regard to the existing facilities, the operation and maintenance for every year of the facility being service as well as dismantling are put as subjects to evaluation.

### Fourth Embodiment

For respective facilities in a waste treatment network, utilities such energy as electricity, fuel (gas and kerosene), etc., water (municipal water, industrial water, and reclaimed waste water), chemicals and the like are required for waste treatment. Some facilities, as the result of waste treatment, can provide utilities such as electricity, gas, steam, hot water, and the like. Such utilities may be used at the facilities themselves, or sold to other facilities of the waste treatment network and/or to facilities outside the network. Accordingly, it becomes also important that conditions relating to flows of utilities ("Setting of condition of utility flow") may be set in a plan.

From this point of view, the fourth embodiment has been provided in which the flow of utilities such as energy like electricity, thermal energy, etc. and water, chemicals, etc. can be created, together with the waste treatment flow according to the first, second or third embodiment, and LCA and LCC regarding the created utility flow can be also calculated. This enables an infrastructure for supply of utilities in the area in question to be subject to simulation and makes it possible to provide simulation in which optimum allocation of utilities is taken into consideration. It is to be noted that the fourth embodiment is implemented in the system shown in Figs. 1 and 2.

In the fourth embodiment, such facilities for supply of energy as "Solar power plant", "Wind power plant", "Private electric power facility", "Fuel cell plant" and "Petroleum refining plant" may be adopted. Such facilities for supply of water as "Water purifying facility", "Water reclamation facility", and so forth may also be adopted. Facilities for chemicals are for supplying chemicals necessary for the respective facilities of the waste treatment network.

The scale or supply capacity of each utility supply facility is inputted in principle by an operator. Icons of these supply facilities are displayed on a screen in the same manner as the waste icons and facility icons (see Figs. 6 - 8, and Figs. 20 and 21). It is to be noted that electricity and thermal energy generated in the course of treatment in waste treatment facilities may be distributed to public facilities, enterprises, etc. and thus icons of such public facilities and enterprises are also displayed.

Setting a utility flow will next be explained with reference to a simulation plan of a waste treatment network that can be created in the second or third embodiment. At first, conditions for future are set by using the concept of the "Term 1", "Term 2", ... and so on sub-divided from the sub-cycle of "Condition 1", "Condition 2" ... and so forth. The "Term 1", "Term 2", ... according to the second embodiment may be used as they are. In the respective "Terms i", the types or sorts of utilities and quantities thereof necessary for the facilities and utilization facilities are calculated to determine the entire types of utilities and quantities thereof for the subject area. If data of the past are available, then they are used, otherwise utilities are estimated from types of building, available floor area, etc.

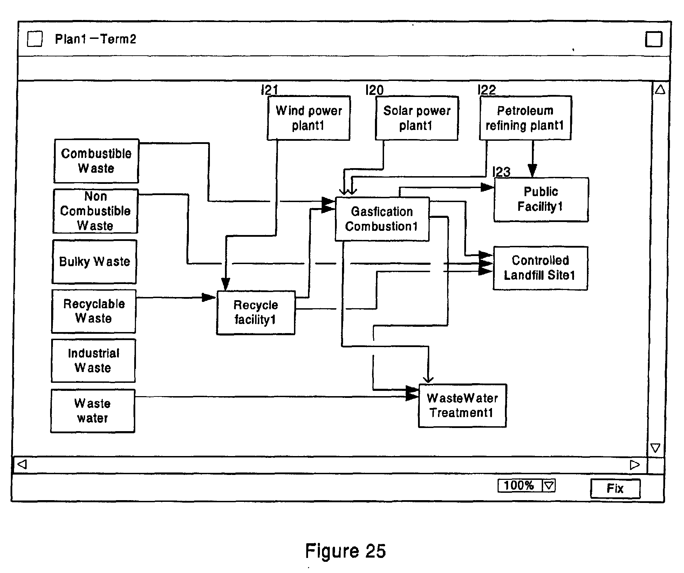

When the required amounts of the utilities for each "Term I" of the entire area have been decided, then a utility flow is implemented on a screen. Fig. 25 illustrates an icon I20 of "Solar power plant", icon I21 of "Wind power plant" and icon I22 of "Petroleum refining plant" as the supply facility icons, and an icon I23 of "Public facility" as the utilization facility icon, in addition to a screen showing a certain "Term i" for a certain plan created in the second or third embodiment. As shown in Fig. 25, in order to indicate supply of energy from the respective supply facilities to the treatment facilities and the utilization facilities, the corresponding icons are linked with each other. Further, in order to indicate supply of energy generated in a treatment facility to other treatment facilities and utilization facilities, the corresponding icons are linked with each other.

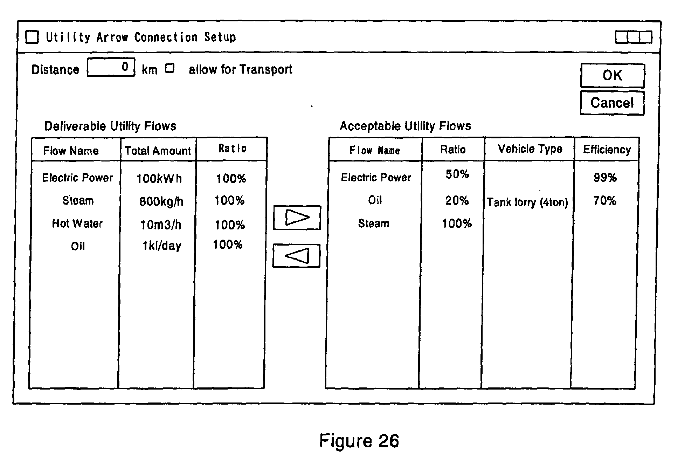

While the link line of the utility flow is formed on the screen, a list of the utilities available at the treatment facilities and the utilization facilities is prepared. Fig. 26 illustrates an example of the prepared list of utilities. In the list, "Deliverable utility flows" at the left side of the screen indicate the quantities of the utilities which can be supplied from three different supply facilities designated by the icons in Fig. 25 and the quantities of utilities which may be generated by the treatment facilities. The "Acceptable utility flows" at the right side of the screen indicate allocation rates of the utilities included in the list, to the treatment facilities and utilization facilities the icons of which are displayed as shown in Fi. 25. The allocation rate is so set to amount to 100% in total, if the utility is allocated to a plurality of facilities. Setting of the allocation rate may be executed in such a manner that supply is made with priority to a specific facility. For example, in case of electricity, allocation may be made with priority to "Public sector". For such utility as to be carried, types of carrying vehicles and a distance of carriage are to be settled. For such utilities those are suffered from loss in transportation such as thermal energy, electricity, and the like, transportation efficiency is to be set. It is assumed that if all the utilities necessary to the facilities of the waste treatment network are not obtained from the settled supply facilities and so on, the remaining (lack) amounts of the utilities are supplied from outer supply facilities.

It is also to be noted that when a utility flow should be made with reference to the first embodiment, supply facility icons and utilization facility icons are dragged-and-dropped on a screen as shown in Figs. 6 and 7 and connecting appropriate icons to each other with utility links.

Based on the utility flow of the produced plans of the utility supply network set, LCA and LCC are calculated in the block B4 shown in Fig. 2.

In the fourth embodiment, LCA and LCC relating to the utility flow which have been calculated for each plan are analyzed and evaluated whereby a best utility plan can be extracted. It is possible that these LCA and LCC of the utility flow may be added to the same of the waste treatment flow, which have been obtained in the first, second or third embodiment, and the results may be comprehensively analyzed and evaluated.

### Fifth Embodiment

In the forth embodiment, it has been described that a utility flow is created in association with a waste treatment flow. However, in some cases, simulation of a utility supply network regardless of a waste treatment network is required. For example, it is effective, by concentrating only on energy as the utility and adopting only energy supply facilities as the supply facilities, to create a supply plan of the energy required by household, factories, public facilities, and the like in a target area, and calculate and evaluate LCA and LCC relating to the supply plan, in view of planning of a zero-emission area. It is also effective to make a plan focusing only on water or any kinds of utilities.

In the fifth embodiment, it is capable of creating simulation plans of utility flow from utility supply facility to utilization facility, calculating LCA and LCC for respective plans, and extracting a plan of a utility supply network.

As to creation of a utility flow plan in the fifth embodiment, the same method as described before with reference to the forth embodiment can be adopted. Namely, if the same method as that of the first embodiment is adopted, it is predicted that types, numbers and capacities of utility supply facilities and types, numbers and necessary quantities of utilization facilities are all constant during the whole simulation period. If the same method as that of the second embodiment is adopted, it is taken into consideration of the variable condition setting on a time axis to create a utility flow supply network, such that that types, numbers and capacities of utility supply facilities and types, numbers and necessary quantities of utilization facilities are settled for each of short terms. Further, it is possible to make a utility supply network by taking into consideration of already existing facilities.

After creating plans of the utility supply network, LCA and LCC are calculated at the block B4 shown in Fig. 2.

In the fifth embodiment, the obtained LCA and LCC for each plan are evaluated and a best plan is extracted in the blocks B5 and B6 shown in Fig. 2.

Further, it is possible that a service center provided with a simulation program to execute any of the first through fourth embodiment or an optional combination of these embodiments is established, and the service center and those specialists for the regional plan involved in regional planning (for example, local administration offices, consulting firms, general construction companies, engineering offices, laboratories, etc.) are connected by a network to establish a regional plan implementation network system. In this way, a plurality of regional planning specialists may interact in bilateral direction over the network, taking advantages of each specialty to develop regional plan. In this case, the service center calculates environmental impacts and costs, and puts the regional plan and the results of calculation to be obtained by not only those regional plan specialists involved in the regional planning but also any of others associated with the regional plan as requested over the network.

### EFFECT OF THE INVENTION

As explained above, the present invention is extremely effective as a support tool for planning a waste treatment and a utility supply in a social environment aiming at a zero-emission society. Local area planning specialists involved in implementing a regional plan such as local administration office, consulting firms, general construction companies, engineering offices, laboratories, and the like, have been apt to evaluate regional plans with priority placed on LCC or the initial costs and running costs. However, as the environmental problems have increasingly received general recognition recently, LCA as well as LCC are being considered important. Since the present invention makes it possible to quickly evaluate not only LCC but also LCA, it is an extremely effective tool for those involved in developing a regional plan.

By networking those persons involved in regional plans with one another by means of the internet, etc. and allowing the present invention to be shared or individually owned by the respective persons, optimum results may be attained within an extremely short time period, through bilateral directional interaction by those specialists. For example, such subjects may be studied and decided in the both aspects of LCA and LCC, as how respective facilities (i.e., waste treatment facilities and utility supply facilities) should be combined, how much size of the scale the respective facilities should have, how timing of investment of the facilities should be decided. Accordingly, the regional plans may be efficiently executed as a virtual organization.

In the mean time, manufacturers of treatment facilities and supply facilities are rigorously competing one another in terms of technology and prices, such that engineers belonging to those manufacturers are incessantly striving to improve the performance (efficiency) and reduce costs (initial cost and running cost) of such facilities. So far, such engineers had to depend on their own experiences and intuition in order to attain improvement of efficiency and reduction of cost, and as the consequence, it took a long time for them to attain the target. Furthermore, in view of the fact that necessity of reduction of environment load is insisted today, it should be studied how such improvement of performance should affect LAC and LCC. According to the conventional practice, since a tremendous amount of repetitive calculation and attendant time were required for this sort of study, it was impossible to acquire the result of study within a short time period and the accuracy of such study was not necessarily high. However, by applying the present invention, such manufacturers may calculate LCA and LCC corresponding to respective stages of resource exploitation--resource processing-transportation-construction-operation-dismantling--recycling, within a short period of time and at high accuracy. It is in this sense, therefore, that the present invention may be a powerful business tool for such manufacturers.

In addition, it is now mandatory to collect accurate data in execution of ISO 14000 series (Environment management), ISO 14020 series (Environment label) and ISO 14040 series (LCA). Although there are many data which may be used in common in execution of these three ISO series, it was so far normal that the respective departments in one particular enterprise collected necessary data for individual use and not collect such data in cooperation with other departments. However, according to the present invention, since these departments in one particular enterprise may share such data, and as the result, very accurate study may be realized by a smaller number of engineers within a short time period. Furthermore, by establishing a system in communication with a facility management system, actual data in the time of operation of respective facilities may be provided, whereby far accurate computation of LCA and LCC based on the actual data may be realized.

## Claims

1. A system for supporting in developing plans of waste recycling and waste treatment by simulating with a computer environment impacts and necessary cost of a waste treatment network, comprising;
a. means for setting types of wastes and quantities thereof in conformity with modes of waste collection in a target area; and
b. means for creating a plan of a treatment facility network by setting on a monitoring screen types of treatment facilities and the numbers thereof provided in the network according to the types and quantities of the wastes, the plan creating means comprises:
means for forming on a plan sheet section in the screen waste icons respectively representing the types of the wastes that has been set;
means for forming on the plan sheet section treatment facility icons respectively representing the treatment facilities when the treatment facilities have been selected from treatment facility item section in the screen;
means for calculating types of residues and quantities thereof, after a first treatment facility icon or one of the waste icons is linked with a second treatment facility icon on the plan sheet section, the residues being generated as the result of treatment by a treatment facility represented by the second treatment facility icon; and
means for displaying on the screen the calculated types and quantities of the residues, whereby the treatment facility plan which includes a treatment flow even from one treatment facility to another treatment facility is set on the screen by an operator interactively.

2. A supporting system as set forth in Claim 1 wherein the plan creating means further comprises means for setting on the screen a location of a treatment facility center at which treatment facilities in the waste treatment network are collectively arranged, and the supporting system further comprises;
means for setting a simulation time period of the waste treatment network;
means for setting whether or not collection and/or carriage of wastes should be simulated;
LCA/LCC calculation means for calculating environment impacts and necessary costs of the waste treatment network throughout the simulation time period for each of the treatment facility plans which have been created by the plan creating means; and
means for extracting a best plan of the waste treatment network, which comprises at least one of means for extracting the best plan in view of environmental and economic points by evaluating the calculated environmental impacts and necessary costs, and means for extracting the best plan in view of waste management policy point as well as the environmental and economic points by evaluating the created plans from a policy view point as well as the calculated environmental impacts and necessary costs.

3. A system for supporting in developing plans of waste recycling and waste treatment by simulating with a computer environment impacts and necessary costs of a waste treatment network, comprising:
a. means for setting a whole simulation time period and dividing it into a plurality of sub-periods on the basis of factors which vary in respect of time in a target area;
b. means for setting types of wastes and quantities thereof in conformity with modes of waste collection in the area for each sub-period;
c. means for setting types of treatment facilities and the number thereof provided in the waste treatment network, and setting lifecycles of the settled respective treatment facilities;
d. means for setting sector terms by dividing the sub-periods to the sector terms based on the settled lifecycles of the respective treatment facilities wherein the delimitation points of the respective sector terms are defined to be starting points and ending points of the respective sub-periods and starting point and ending point of the lifecycle of the respective treatment facilities;
e. means for creating waste treatment flows of the waste treatment network by relating the settled wastes with the settled treatment facilities for each set sector term; and
f. LCA/LCC calculating means for calculating environmental impacts and necessary costs of the waste treatment network for each sector term, summing the environmental impacts and the cost for all the sector terms to obtain environmental impacts and costs for the entire simulation time period.

4. A supporting system as set forth in Claim 3, wherein the waste treatment flow creating means comprises:
means for forming on a plan sheet section of a monitoring screen waste icons indicating the settled waste types and treatment facility icons indicating the settled treatment facilities;
means for calculating types of residue and quantities thereof, after a first treatment facility icon or one of the waste icons has been linked with a second treatment facility icon on the plan sheet section, the residue being generated as the result of treatment by a treatment facility indicated by the second treatment facility icon; and
means for displaying the calculated types and quantities of the residue.

5. A supporting system as set forth in Claim 3 or Claim 4, wherein the supporting system further comprises:
means for extracting a best plan of the waste treatment network, which comprises at least one of means for extracting the best plan in view of environmental and economic points by evaluating the calculated environmental impacts and necessary costs, and means for extracting the best plan in view of waste management policy point as well as the environmental and economic points by evaluating the created plans from a policy view point as well as the calculated environmental impacts and necessary costs.

6. A supporting system as set forth in anyone of Claims 3 - 5, wherein the treatment facility setting means is adapted to set the existing treatment facilities in the area as the same to be provided in the waste treatment network for simulation.

7. A supporting system as set forth in anyone of Claims 1 - 6 wherein
the supporting system further comprises means of creating utility flows in the waste treatment network;
the LCA/LCC calculating means is adapted to calculate the environment impacts and the necessary costs of the waste treatment network including the utility flows.

8. A supporting system as set forth in Claim 7 wherein the utility flow creating means comprises:
means for forming on the plan sheet section of the monitoring screen utility supply facility icons indicating supply facilities of utilities along with the settled treatment facility icons;
means for setting capacities or quantities of utilities supplied by the respective settled supply facilities; and
means, when one of the utility supply facility ions and one of the treatment facility icons are connected with each other on the plan sheet section, for setting associated allocation of utilities and efficiency of carriage and transmission of the utilities to a waste treatment facility represented by the treatment facility icon.

9. A system for supporting in developing plans of utility supply network by making utility flows from utility supply facilities to utility utilization facilities in a target area and simulating with a computer environment impacts and necessary costs of the utility flows, comprising:
a. means for setting a whole simulation time period and dividing it into a plurality of sub-periods on the basis of factors which vary in respect of time in a target area;
b. means for setting types of utilities and quantities thereof necessary to the respective utilization facilities for each sub-period;
c. means for setting types of utilization facilities and the number thereof provided in the utility supply network, and setting lifecycles of the settled respective utilization facilities;
d. means for setting sector terms by dividing the sub-periods to the sector terms based on the settled lifecycles of the respective utilization facilities wherein the delimitation points of the respective sector terms are defined to be starting points and ending points of the respective sub-periods and starting point and ending point of the lifecycle of the respective utilization facilities;
e. means for creating utility flows of the utility supply network by relating the settled utilities with the settled utilization facilities for each set sector term; and
f. LCA/LCC calculating means for calculating environmental impacts and necessary costs of the utility supply network for each sector term, summing the environmental impacts and the cost for all the sector terms to obtain environmental impacts and costs for the entire simulation time period.

10. A method of supporting in developing plans of waste recycling and waste treatment by simulating with a computer environment impacts and necessary cost of a waste treatment network, comprising the steps of;
a. setting types of wastes and quantities thereof in conformity with modes of waste collection in a target area; and
b. creating a plan of a treatment facility network by setting on a monitoring screen types of treatment facilities and the numbers thereof provided in the network according to the types and quantities of the wastes, comprising:
forming on a plan sheet section in the screen waste icons respectively representing the types of the wastes that has been set;
forming on the plan sheet section treatment facility icons respectively representing the treatment facilities when the treatment facilities have been selected from treatment facility item section in the screen;
calculating types of residues and quantities thereof, after a first treatment facility icon or one of the waste icons is linked with a second treatment facility icon on the plan sheet section, the residues being generated as the result of treatment by a treatment facility represented by the second treatment facility icon; and
displaying on the screen the calculated types and quantities of the residues,
whereby the treatment facility plan which includes a treatment flow even from one treatment facility to another treatment facility is set on the screen by an operator interactively.

11. A method as set forth in Claim 10 wherein the plan creating step further comprises setting on the screen a location of a treatment facility center at which treatment facilities in the waste treatment network are collectively arranged, and the method further comprises;
setting a simulation time period of the waste treatment network;
setting whether or not collection and/or carriage of wastes should be simulated;
calculating environment impacts and necessary costs (LCA/LCC) of the waste treatment network throughout the simulation time period for each of the treatment facility plans which have been created by the plan creating step; and
extracting a best plan of the waste treatment network, which comprises at least one of step of extracting the best plan in view of environmental and economic points by evaluating the calculated environmental impacts and necessary costs, and step of extracting the best plan in view of waste management policy point as well as the environmental and economic points by evaluating the created plans from a policy view point as well as the calculated environmental impacts and necessary costs.

12. A method of supporting in developing plans of waste recycling and waste treatment by simulating with a computer environment impacts and necessary costs of a waste treatment network, comprising the steps of:
a. setting a whole simulation time period and dividing it into a plurality of sub-periods on the basis of factors which vary in respect of time in a target area;
b. setting types of wastes and quantities thereof in conformity with modes of waste collection in the area for each sub-period;
c. setting types of treatment facilities and the number thereof provided in the waste treatment network, and setting lifecycles of the settled respective treatment facilities;
d. setting sector terms by dividing the sub-periods to the sector terms based on the settled lifecycles of the respective treatment facilities wherein the delimitation points of the respective sector terms are defined to be starting points and ending points of the respective sub-periods and starting point and ending point of the lifecycle of the respective treatment facilities;
e. creating waste treatment flows of the waste treatment network by relating the settled wastes with the settled treatment facilities for each set sector term; and
f. calculating environmental impacts and necessary costs (LCA/LCC) of the waste treatment network for each sector term, summing the environmental impacts and the cost for all the sector terms to obtain environmental impacts and costs for the entire simulation time period.

13. A method as set forth in Claim 12, wherein the waste treatment flow creating step comprises the steps of:
forming on a plan sheet section of a monitoring screen waste icons indicating the settled waste types and treatment facility icons indicating the settled treatment facilities;
calculating types of residue and quantities thereof, after a first treatment facility icon or one of the waste icons has been linked with a second treatment facility icon on the plan sheet section, the residue being generated as the result of treatment by a treatment facility indicated by the second treatment facility icon; and
displaying the calculated types and quantities of the residue.

14. A method as set forth in Claim 12 or 13, wherein the method further comprises:
extracting a best plan of the waste treatment network, which comprises at least one of step of extracting the best plan in view of environmental and economic points by evaluating the calculated environmental impacts and necessary costs, and step of extracting the best plan in view of waste management policy point as well as the environmental and economic points by evaluating the created plans from a policy view point as well as the calculated environmental impacts and necessary costs.

15. A method as set forth in anyone of Claims 12 - 14, wherein the treatment facility setting step is adapted to set treatment facilities existing in the area as the same to be provided in the waste treatment network for simulation.

16. A method as set forth in anyone of Claims 10 - 15 wherein
the method further comprises the step of creating utility flows in the waste treatment network;
the LCA/LCC calculating step is adapted to calculate the environment impacts and the necessary costs of the waste treatment network including the utility flows.

17. A method as set forth in Claim 16 wherein the utility flow creating step comprises the steps of:
forming on the plan sheet section of the monitoring screen utility supply facility icons indicating supply facilities of utilities along with the settled treatment facility icons;
means for setting capacities or quantities of utilities supplied by the respective settled supply facilities; and
means, when one of the utility supply facility ions and one of the treatment facility icons are connected with each other on the plan sheet section, for setting associated allocation quantity rates of utilities and efficiency of carriage and transmission of the utilities to a waste treatment facility represented by the treatment facility icon.

18. A method of supporting in developing plans of utility supply network by making utility flows from utility supply facilities to utility utilization facilities in a target area and simulating with a computer environment impacts and necessary costs of the utility flows, comprising the steps of:
a. setting a whole simulation time period and dividing it into a plurality of sub-periods on the basis of factors which vary in respect of time in a target area;
b. setting types of utilities and quantities thereof necessary to the respective utilization facilities for each sub-period;
c. setting types of utilization facilities and the number thereof provided in the utility supply network, and setting lifecycles of the settled respective utilization facilities;
d. setting sector terms by dividing the sub-periods to the sector terms based on the settled lifecycles of the respective utilization facilities wherein the delimitation points of the respective sector terms are defined to be starting points and ending points of the respective sub-periods and starting point and ending point of the lifecycle of the respective utilization facilities;
e. creating utility flows of the utility supply network by relating the settled utilities with the settled utilization facilities for each set sector term; and
f. calculating environmental impacts and necessary costs (LCA/LCC) of the utility supply network for each sector term, summing the environmental impacts and the cost for all the sector terms to obtain environmental impacts and costs for the entire simulation time period.

19. A computer-readable storage medium storing a program for simulating with a computer environmental impacts and necessary costs of waste recycling and waste treatment, wherein the program is the one which can execute the method as set forth in anyone of Claims 10 - 18.

20. A network system for implementing regional plans by which a plurality of terminals of regional planning specialists are connected with one another on the network such as the internet, the network system including a service center which comprises:
a storage medium storing the simulation program as set forth in Claim 19;
means for allowing the specialists to access the simulation program on the network;
means for enabling creation of plans by use of the simulation program, while any of the specialists involved in developing the regional plan are interactively communicating; and
means for allowing any of the specialists involved in the regional plans on the network to make access to the created plans and the environmental impacts and costs which have been calculated according to the simulation program.
